# EUROPÄISCHE PATENTSCHRIFT

(11) **EP 1 137 564 B1**
(45) Veröffentlichungstag und Bekanntmachung des Hinweises auf die Patenterteilung: **11.06.2003**
(21) Anmeldenummer: 99964357.0
(22) Anmeldetag: 22.11.1999
(51) Int. Cl.: B60T 13/16, B60T 13/22

(54) **ANHÄNGERBREMSVENTIL**
TRAILER AIR BRAKE VALVE
SOUPAPE DE FREIN DE REMORQUE

(30) Priorität: 11.12.1998 DE 19857355
(43) Veröffentlichungstag der Anmeldung: 04.10.2001
(73) Patentinhaber: Bosch Rexroth AG, 97816 Lohr am Main (DE)
(72) Erfinder: BIENER, Rainer, D-97854 Steinfeld-Hausen (DE); FASSNACHT, Kurt, D-97794 Rieneck (DE)
(74) Vertreter: Winter, Brandl, Fürniss, Hübner, Röss, Kaiser, Polte, Partnerschaft
(86) Internationale Anmeldenummer: DE9903708
(87) Internationale Veröffentlichungsnummer: WO00035728

(56) Entgegenhaltungen:
- DE-A- 3 917 144
- DE-A- 3 917 145
- DE-A- 19 514 733

## Beschreibung

Die Erfindung betrifft ein Anhängerbremsventil gemäß dem Oberbegriff des Patentanspruches 1.

Derartige Bremsventile sind aus der DE-PS 37 12 018 und der DE-PS 37 37 579 bekannt und werden beispielsweise zur Ansteuerung der Bremsanlage von Anhängern benutzt, die an Ackerschlepper angehängt sind.

Ein Druck des Bremskreises des Zugfahrzeuges wird üblicherweise als Pilotdruck verwendet, um das Anhängerbremsventil anzusteuern. Bei den bekannten Anhängerbremsventilen wirkt der Pilotdruck auf einen Pilotkolben, der über ein Federsystem an einer Stirnseite eines Steuerkolbens des Bremsventils abgestützt ist. Bei den in den vorgenannten Druckschriften offenbarten Bremsventilanordnungen ist das Federsystem vorgespannt im Ventilgehäuse aufgenommen.

In der DE 195 14 33 A1 wird eine Verbesserung des vorbeschriebenen Konzeptes vorgeschlagen, wobei anstelle des vorgespannten Federsystems (zwei Einzelfedern) eine einzige Feder ohne Federvorspannung verwendet wird. Auch durch die Verwendung einer einzelnen Feder kann die Druckmittelentnahme aus dem Pilotkreis beim maximalen Bremsdruck (100 bis 150 bar) auf ein Minimum begrenzt werden.

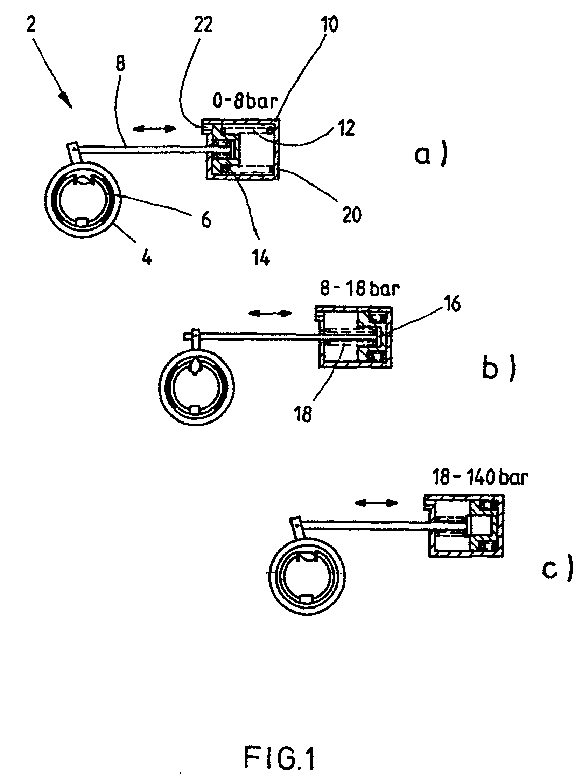

Figur 1 zeigt in stark vereinfachter Form die Bremsanlage eines Anhängers, die über die vorbeschriebenen Bremsventilanordnungen angesteuert wird. Derartige Bremsanlagen sind aus dem Stand der Technik hinlänglich bekannt, so daß sich im folgenden auf die Beschreibung der Grundelemente beschränkt wird.

Die in Figur 1 dargestellte Bremsanlage 2 eines Anhängers hat eine Bremstrommel 4, deren Bremsbacken 6 über einen Hebelmechanismus 8 in Bremseingriff bringbar sind.

Die Betätigung des Hebelmechanismus 8 erfolgt über ein Federspeichersystem 10, über das sich drei Betriebszustände realisieren lassen, die in Figur 1 mit a) bis c) angedeutet sind.

Die eingangs beschriebenen Bremsventile erzeugen im Ausgangszustand, d.h. bei unbetätigter Fahrzeugbremse einen Mindestdruck, der im Bereich zwischen 8 bis 18 bar, vorzugsweise bei 12 bis 15 bar liegt. Dieser Betriebszustand ist in Figur 1 mit b) angedeutet.

Bei abgehängtem Anhänger oder bei einer Störung im Hydraulikkreislauf liegt der Bremsdruck im Bremszylinder unterhalb des vorbeschriebenen Bereiches, d.h. bei 0 bis 8 (12) bar. Die nationalen Sicherheitsvorschriften erfordern, daß die Anhängerbremse bei Absinken des Bremsdruckes auf das vorgenannte Niveau einrückt, so daß der Anhänger abgebremst wird. Dieser Betriebszustand ist in Figur 1 mit a) dargestellt.

Bei Betätigung der Bremse des Zugfahrzeuges wird über die Bremsventilanordnung ein Bremsdruck aufgebaut, der im Bereich zwischen 18 bar und einem Maximaldruck liegt, der beispielsweise bei 140 bar liegen kann (c) in Figur 1).

Das Federspeichersystem 10 hat somit die Aufgabe, die Bremstrommel in Abhängigkeit von den vorgenannten Betriebszuständen anzusteuern. Üblicherweise haben derartige Federspeichersysteme eine Speicherfeder 12, die einen Speicherkolben 14 beaufschlagt, der mit dem Hebelmechanismus 8 in Wirkverbindung steht. In dem tassenförmig aufgebauten Speicherkolben 14 ist ein Bremskolben 16 geführt, der über eine Steuerfeder 18 (siehe Figur 1b)) gegen den Boden des Speicherkolbens 14 vorgespannt ist. Der Bremskolben 16 wirkt mittelbar oder unmittelbar auf den Hebelmechanismus 8, so daß eine Axialbewegung des Speicherkolbens 14 oder des Bremskolbens 16 in eine Stellbewegung des Hebelmechanismus umsetzbar ist.

Der Speicherkolben 14 ist in einem Federspeichergehäuse 20 geführt, an dem ein Eingangsanschluß 22 ausgebildet ist, der mit dem Ausgang der Bremsventilanordnung hydraulisch verbunden ist.

Die Federrate der Speicherfeder 12 ist derart ausgelegt, daß sie im Druckbereich zwischen 8 bis 18 bar über den Speicherkolben 14 zusammengedrückt wird, so daß der Speicherkolben 14 an einem Endanschlag anliegt. Die Bremsbacken 6 sind in diesem Druckbereich außer Eingriff.

Bei Unterschreiten eines Mindestbremsdruckes (im Bereich zwischen 0 bis 8 bar) am Eingangsanschluß 22 wird der Speicherkolben 14 durch die Kraft der Speicherfeder 12 aus der Darstellung gemäß Figur 1 b) nach links bewegt, so daß die schwache Steuerfeder 18 zusammengedrückt und der Hebelmechanismus 8 mitgenommen wird und die Bremsbacken 6 der Bremstrommel 4 einrücken. D.h. beim Abhängen des Anhängers vom Zugfahrzeug oder bei einer Störung im System rückt die Bremsanlage 2 aufgrund der Wirkung der starken Speicherfeder 12 selbsttätig ein.

Bei Betätigung der Bremse des Zugfahrzeuges steigt der Bremsdruck auf den Bereich zwischen 18 bis 140 bar (Betriebszustand c)) an, so daß der Speicherkolben 14 in seine Endlage gebracht wird. In diesem Druckbereich wird der kleine Bremskolben 16 gegen die Kraft der Steuerfeder 18 bewegt, so daß er vom Boden des Speicherkolbens 14 abhebt und den Hebelmechanismus 8 mitnimmt. Der Anhänger wird dann in Abhängigkeit vom anliegenden Bremsdruck abgebremst.

Bei den eingangs beschriebenen Konstruktionen wird die Parkbremsfunktion dadurch realisiert, daß zwischen die Bremsanlage 2 und die Bremsventilanordnung ein Schaltventil (nicht dargestellt) geschaltet ist, das über ein elektrisches Signal ansteuerbar ist, das bei Betätigen oder Lösen der Parkbremse abgegeben wird. D.h. bei Betätigen der Parkbremse oder bei Abhängen des Anhängers wird das Schaltventil umgeschaltet, so daß der Ausgang der Bremsventilanordnung mit einem Tank verbunden und der Bremsdruck am Eingangsanschluß 22 auf das bezüglich der Figur 1 a) genannte Niveau abgesenkt wird.

Bei Lösen des Parkbremseingriffes wird das Schaltventil wieder in seine Grundposition zurückgebracht, in der der Ausgangsanschluß der Bremsventilanordnung mit dem Eingangsanschluß 22 der Bremsanlage 2 verbunden ist.

Nachteilig bei dieser Konstruktion ist, daß das Druckmittel das zwischen Bremsventilanordnung und Bremsanlage 2 geschaltete Schaltventil durchströmen muß, so daß dieses mit geeigneten Durchströmungsguerschnitten ausgelegt werden muß, um die Druckverluste auf ein Minimum zu reduzieren.

Zur Beseitigung dieser Nachteile wird in der nachveröffentlichten Patentanmeldung 198 37 445.3. der Anmelderin eine Bremsventilanordnung vorgeschlagen, bei der einem Anhängerbremsventil ein Parkventil zugeordnet ist, über das bei Betätigen der Parkbremse die Rückseite des Regelkolbens mit einem Steuerdruck derart beaufschlagt wird, daß auf dasjenige Druckniveau abgesenkt wird, bei dem die Bremsanlage des Anhängers selbsttätig einfällt.

Das heißt, bei dieser neuen Lösung wird die geforderte Sicherheitsfunktion lediglich durch Eingriff in die Steuerseite der Bremsventilanordnung erfüllt, während beim eingangs genannten Stand der Technik ein externes Schaltventil in den Druckmittelkreislauf geschaltet werden mußte. Bei beiden Lösungen sind jedoch zusätzliche Ventilanordnungen erforderlich, um die Sicherheitsfunktion zu realisieren.

In Dokument DE3917145 werden drei Betriebszustände, und zwar Handbremse angezogen, Anhängerbremse gelöst und Bremspedal betätigt, über die Betätigung von 3 Kolben vorgesehen. Zum Lösen der Anhängerbremse während dabei die Fluidverbindung zwischen einem Pumpenanschluß und einem Druckbegrenzungsventil über eine Ringnut in einem Kolben hergestellt, während sowohl beim Anziehen der Handbremse als auch beim Betätigen des. Bremspedals die Fluidverbindung über einen Ventilkolben erfolgt.

Der Grundaufbau der Vorrichtung nach Dokument DE3917144 ist ähnlich dem von der Vorrichtung aus gattungsgemäßem Dokument DE3917145, wobei aber zum Auslösen der Bremse nur ein einfacher Kolben zum Einsatz gelangt.

Demgegenüber liegt der Erfindung die Aufgabe zugrunde, ein Anhängerbremsventil zu schaffen, bei dem die Sicherheitsfunktionen mit verringertem vorrichtungstechnischen Aufwand realisierbar sind.

Diese Aufgabe wird durch ein Anhängerbremsventil mit den Merkmalen des Patentanspruchs 1 gelöst.

Erfindungsgemäß kann der Regelkolben des Anhängerbremsventils mittelbar oder unmittelbar über einen Elektromagneten derart beaufschlagt werden, daß er bei Betätigen der Parkbremse in eine Position verschiebbar ist, in der der Bremsdruck soweit abgesenkt wird, daß die Bremsanlage des Anhängers einfällt. Aufgrund der Verwendung eines Elektromagneten müssen keine eigenen Ventilanordnungen zur Beaufschlagung des Regelkolbens vorgesehen werden, so daß das Anhängerbremsventil sehr kompakt und kostengünstig gefertigt werden kann. Der Elektromagnet kann beispielsweise als eigenes Geberteil direkt in das Gehäuse des Anhängerbremsventils eingeschraubt werden, so daß auch der montagetechnische Aufwand wesentlich geringer als bei den eingangs beschriebenen Lösungen sein dürfte.

Bei einem bevorzugten Ausführungsbeispiel der Erfindung hat das Anhängerbremsventil einen Pilotkolben, der mit einem Pilotdruck beaufschlagbar ist, der in Abhängigkeit von der Betätigung eines Bremspedals an die Pilotkolbenrückseite gemeldet ist. Der Pilotkolben wiederum wirkt über die Regelfedereinrichtung auf den Regelkolben.

Bei dieser bevorzugten Konstruktion beaufschlagt der Elektromagnet eine Bremsfeder, die an der Pilotkolbenrückseite abgestützt ist und zusätzlich zum Pilotdruck auf den Pilotkolben wirkt. Das heißt, bei entsprechender Bestromung des Elektromagneten wird die Regelfedereinrichtung über die Bremsfeder und den Pilotkolben vorgespannt.

Die Federrate der Bremsfeder wird bevorzugterweise derart gewählt, daß im vorgespannnten Zustand eine Federkraft auf den Pilotkolben wirkt, die demjenigen vorbestimmten Bremsdruckbereich entspricht, der in Figur 1 mit b) gekennzeichnet ist.

Bei einer vorteilhaften Weiterbildung der Erfindung trägt ein Stößel des Elektromagneten einen Federteller für die Bremsfeder, wobei der Hub des Elektromagneten und damit die Vorspannung der Bremsfeder durch einen Anschlag begrenzt ist.

Die Axiallänge der Anhängerbremsventilanordnung läßt sich verringern, wenn ein Endabschnitt der Bremsfeder in einem Sackloch des Pilotkolbens aufgenommen ist.

Zur Betätigung des Elektromagneten wird vorteilhafterweise ein Signal verwendet, das bei Einrücken der Parkbremse des Zugfahrzeuges abgegeben wird.

Der Energieverbrauch der gesamten Bremsanlage läßt sich weiter absenken, wenn in dem in Figur 1 mit c) bezeichneten Druckbereich nicht der tatsächlich an der Bremseinrichtung herrschende Lastdruck (8 bis 18 bar) zur Hydraulikpumpe gemeldet wird, sondern ein Lastdruck auf einem niedrigeren Niveau, vorzugsweise ein Lastdruck von 0 bar. Durch diese Maßnahme wird erreicht, daß der Stand-By-Druck der ausgeführten Hydraulikpumpe erhalten bleibt. D.h. durch diese Weiterbildung wird der Anhängerbremsdruck nur bei abgebremstem Anhänger (im Druckbereich zwischen 18 bis 140 bar) zur Pumpe gemeldet.

Diese energieeinsparende Funktion wird bei einem bevorzugten Ausführungsbeispiel der Erfindung durch ein Wegeventil der Steueranordnung ermöglicht, das in einer federvorgespannten Grundposition die Lastdruckmeldeleitung zur Hydraulikpumpe mit dem Tank verbindet. Die Steuerfeder ist derart ausgelegt, daß die Lastdruckmeldeleitung erst dann mit der den Anhängerbremsdruck führenden Steuerleitung verbunden wird, wenn der Bremsdruck das in Figur 1 c) beschriebene Niveau erreicht.

Sonstige vorteilhafte Weiterbildungen der Erfindung sind Gegenstand der weiteren Unteransprüche.

Die Erfindung wird im folgenden anhand schematischer Zeichnungen näher erläutert. Es zeigen:
Figur 1 eine Prinzipskizze der Bremsanlage eines Anhängers,
Figur 2 ein Schaltschema einer Bremsventilanordnung mit einem erfindungsgemäßen Anhängerbremsventil und
Figur 3 ein Geberteil für das Anhängerbremsventil aus Figur 2.

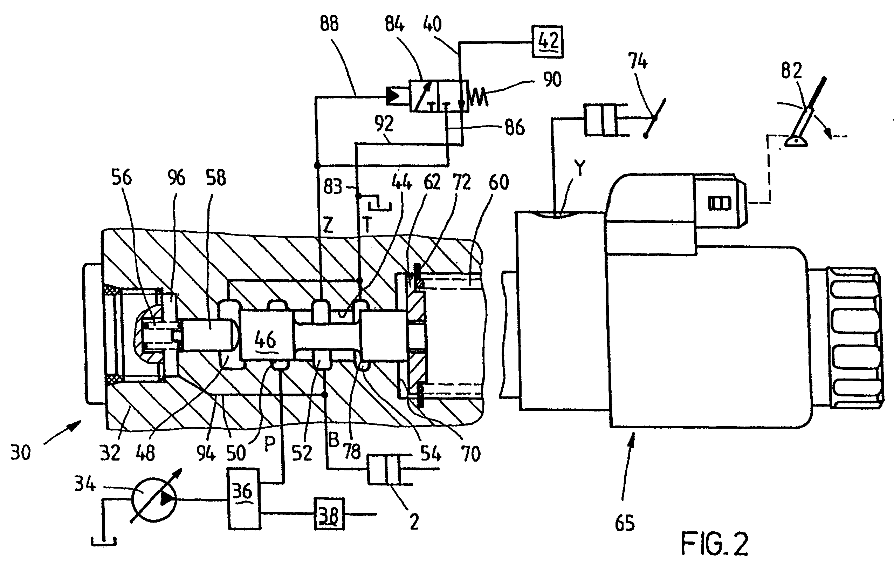

In Figur 2 ist ein Längsschnitt eines Anhängerbremsventils 30 dargestellt, dessen prinzipieller Aufbau bereits in der eingangs genannten DE 195 14 733 A1 und der nachveröffentlichten P 19837445.3 der Anmelderin beschrieben ist. Der Einfachheit halber werden im folgenden lediglich die Grundelemente des Anhängerbremsventils 30 erläutert, hinsichtlich weiterer Details sei auf die Voranmeldungen verwiesen, deren Offenbarung zu derjenigen der vorliegenden Anmeldung zu zählen ist.

Das Anhängerbremsventil 30 hat ein Ventilgehäuse 32, das mit einem Pumpenanschluß P, einem Tankanschluß T, einem Bremsanschluß B und Steueranschlüsse W, X, Y und Z versehen ist.

Am Pumpenanschluß P ist eine Pumpe, beispielsweise eine Konstantpumpe mit nachgeschalteter 3-Wegedruckwaage oder eine Regelpumpe 34 angeschlossen. Der Regelpumpe 34 ist eine Steuereinrichtung 36 zugeordnet, über die das von der Regelpumpe 34 geförderte Druckmittel einem weiteren Verbraucher 38 oder dem Anhängerbremsventil 30 zuführbar ist. An dem Bremsanschluß B ist die in Figur 1 beschriebene Bremsanlage 2 eines nicht dargestellten Anhängers angeschlossen.

Die Ansteuerung der Regelpumpe 34 (oder auch einer Konstantpumpe mit Druckwaage) erfolgt in Abhängigkeit vom Lastdruck am Verbraucher, d.h. im vorliegenden Fall vom Bremsdruck, der im Bereich des Bremsanschlusses B abgegriffen wird. Bei der in Figur 2 dargestellten Schaltung wird der Lastdruck über eine Lastdruckmeldeleitung 40 zu einem Pumpenregler 42 geführt, über den die Regelpumpe 34 angesteuert ist.

Im Ventilgehäuse 32 des Anhängerbremsventils 30 ist eine Ventilbohrung 44 ausgebildet, in der ein Regelkolben 46 axial verschiebbar geführt ist. Die Ventilbohrung 44 hat vier axial beabstandete Ringräume 48, 50, 52, 54, wobei die beiden Ringräume 48 und 54 mit dem Tank T verbunden sind, während die beiden mittleren Ringräume 50, 52 mit dem Pumpenanschluß P bzw. dem Bremsanschluß B verbunden sind.

In seiner dargestellten Position ist der Regelkolben 46 über eine Steuerfeder 56 und einen zwischengeschalteten Übersetzerkolben 58 in derjenigen Richtung beaufschlagt, in der eine Steuerkante 78 des Regelkolbens 46 die Verbindung zwischen den beiden Ringräumen 52 und 54 aufsteuert, so daß der Bremsanschluß B mit dem Tankanschluß T verbunden ist.

In entgegengesetzter Richtung wirkt auf den Regelkolben 36 eine Regelfeder 60, die den Regelkolben 46 über einen Federteller 62 beaufschlagt.

Die Regelfeder 60 ist an einem Pilotkolben 64 abgestützt, auf dessen Rückseite der Druck am Steueranschluß Y, d.h. der Druck im Pilotkreis wirkt. Der Pilotkolben 64 ist in einem Geberteil 65 geführt, das im folgenden näher beschrieben wird.

Bei dem in Figur 2 dargestellten Ausführungsbeispiel ist die Regelfeder 60 mit einer geringen Vorspannung von etwa 8 - 18 bar, z.B. 16 bar im Ventilgehäuse aufgenommen, die niedriger als das Regel-Δp der Pumpe 34 in Höhe von z.B. 20 bar ist.

Der an der benachbarten Stirnfläche des Regelkolbens 46 anliegende Federteller 62 ist im Abstand zu einer Radialschulter 70 des Federraumes des Ventilgehäuses 32 angeordnet. Die Bewegung des Federtellers 62 weg von dieser Radialschulter 70 wird durch einen Anschlagring 72 begrenzt, der in eine Umfangsnut des Federraums eingesetzt ist.

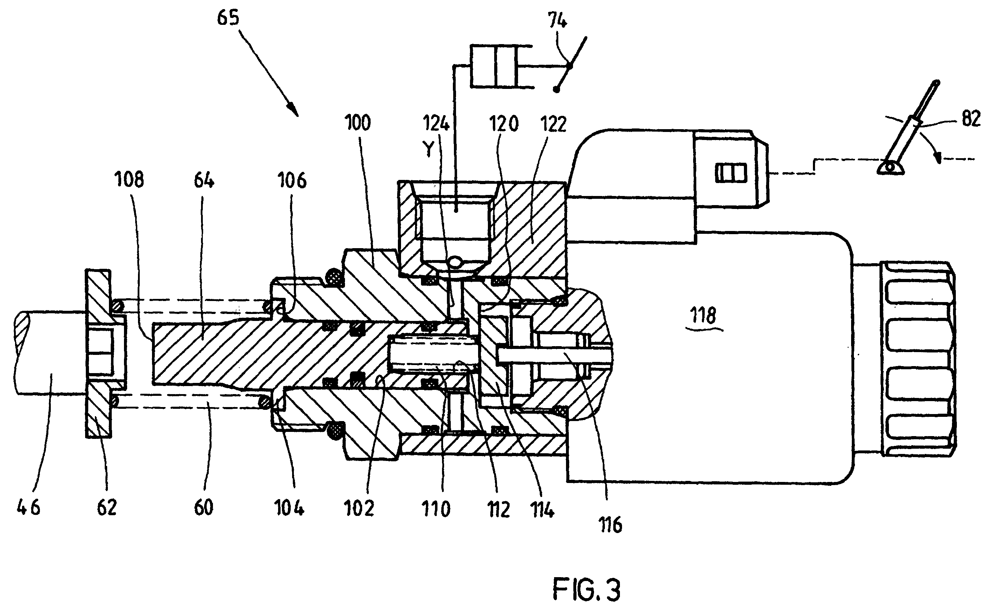

Figur 3 zeigt einen Schnitt durch das Geberteil 65, über das der Regelkolben 46 beaufschlagbar ist.

Das Geberteil 65 mit dem Pilotkolben 64 wird mit einem Außengewinde einer Buchse 100 in das Ventilgehäuse 32 eingeschraubt und bildet somit den stirnseitigen Abschluß der Ventilbohrung 44. Die Buchse 100 hat eine Axialbohrung 102, in der der Pilotkolben 64 geführt ist. Dieser hat einen radial vorstehenden Radialbund 104, der in eine Anschlagausnehmung 106 der Buchse 100 eintaucht, so daß die in Figur 3 rechte Axialendposition des Pilotkolbens 64 vorgegeben ist. An der von der Anschlagausnehmung 106 entfernten Stirnfläche des Radialbundes 104 ist die Regelfeder 60 abgestützt. Die linke Endpostion des Pilotkolbens 64 ist durch Auflaufen der Stirnseite 108 auf den Federteller 62 vorgegeben, dessen Endposition wiederum durch die Radialschulter 70 im Ventilgehäuse 32 festgelegt ist.

Die vom Federteller 62 entfernte Rückseite des Pilotkolbens 64 ist von einer Bremsfeder 110 beaufschlagt, deren in Figur 3 linker Endabschnitt in eine Sacklochbohrung 112 des Pilotkolbens 64 eintaucht. Der andere Endabschnitt der Bremsfeder 110 ist an einem Federteller 114 abgestützt, der an einem Stößel 116 eines an der Buchse 100 angeflanschten Elektromagneten 118 befestigt ist. Dieser ist als Schaltmagnet mit stoßender Wirkrichtung ausgeführt. Der Maximalhub des Elektromagneten 118 ist durch Auflaufen des Federtellers 114 auf eine Anschlagschulter 120 der Buchse 100 vorgegeben.

Der Steueranschluß Y ist an einer Anschlußplatte 122 ausgebildet, die an der Buchse 100 des Geberteils 65 befestigt ist. Der anschlußplattenseitige Teil des Steueranschlusses Y ist über eine Steuerbohrung 124 mit der Axialbohrung 102 verbunden. Der Steueranschluß Y ist an den Bremskreis des nicht dargestellten Zugfahrzeuges angeschlossen, so daß bei der Betätigung eines Bremspedals 74 ein Pilotdruck über den Steueranschluß Y und die Steuerbohrung 124 auf die Rückseite des Pilotkolbens 64 wirkt.

Figur 3 zeigt das Geberteil bei bestromtem Elektromagneten 118 und in einer Endposition des Pilotkolbens 64, so daß der Federteller 114 an der Anschlagschulter 120 anliegt. Die Bremsfeder 110 ist demzufolge vorgespannt. Die Federrate der Bremsfeder 110 ist derart gewählt, daß bei bestromtem Elektromagenten 118 über die Bremsfeder 110 eine Kraft auf die Rückseite des Pilotkolbens 64 wirkt, die etwa einem Druck im Bereich von 8 - 18 bar (Bereich b) in Figur 1) entspricht.

Bei Stromlosschalten des Elektromagneten 118 wird die Bremsfeder 110 entspannt und entsprechend der Pilotkolben 64 entlastet, so daß die Pilotkolbenrückseite nur noch durch den Pilotdruck am Steueranschluß Y beaufschlagt ist.

Die Ansteuerung des Elektromagneten 118 erfolgt über ein Signal, das bei Betätigen der Parkbremse 82 abgegeben wird. Das heißt, bei Betätigen der Parkbremse 82 wird der Elektromagnet 118 stromlos geschaltet und die Bremsfeder 110 entspannt.

Das Anhängerbremsventil 30 hat zur Realisierung einer Energiesparfunktion einen Steueranschluß Z, über den der Druck im Ringraum 52 als Steuerdruck abgegriffen werden kann.

Die in Figur 2 dargestellte Anordnung hat des weiteren ein Wegeventil 84, das mit seinem Eingangsanschluß über eine Bremsdrucksteuerleitung 86 mit dem Anschluß Z verbunden ist. In der dargestellten Grundposition c) ist der Eingangsanschluß des Wegeventils 84 abgesperrt. Die Bremsdrucksteuerleitung 86 hat eine Zweigleitung 88, über die der Druck am Steueranschluß Z zu der in Richtung der zweiten Schaltstellung d des Wegeventils 84 wirkenden Stirnfläche des Wegeventilkolbens geführt ist. Die Grundposition c des Wegeventils 84 ist durch die Wirkung einer Druckfeder 90 vorgegeben, die ein Umschalten des Wegeventilkolbens 84 durch Druckaufbau in der Zweigleitung 88 erst zuläßt, wenn dieser Schaltdruck den in Figur 1 angedeuteten mittleren Bereich überschritten hat. D.h. die Druckkraft in der Zweigleitung 88 muß je nach Auslegung größer als der der Vorspannung der Regelfeder 60 entsprechende Druck sein. Andererseits muß zur Umschaltung eine Kraft genügen, die einem Schaltdruck kleiner oder höchstens gleich dem Regel-Δp der Pumpe 34 entspricht. Bei 16 bar Vorspannung der Regelfeder 60 und einem Pumpen-Δp von 20 bar kann also das Wegeventil 84 auf einen Schaltdruck von 18 bar eingestellt sein.

In der Grundposition c ist die Lastdruckmeldeleitung 40 über eine Tankzweigleitung 92 mit einer Tankleitung 83 verbunden.

Bei Überschreiten des vorgenannten Schaltdruckes wird der Wegeventilkolben in die mit d gekennzeichnete Schaltstellung gebracht, in der ein dem Bremsdruck entsprechender Lastdruck über den Steueranschluß Z, die Bremsdrucksteuerleitung 86 und die Lastdruckmeldeleitung 40 zum Pumpenregler 42 gemeldet wird. D.h. der Stand-By-Druck der Regelpumpe 34 wird nur dann erhöht, wenn der Bremsdruck ein Niveau erreicht hat, in dem er die Kraft der Druckfeder 90 überwinden kann.

Zum besseren Verständnis der vorgenannten Bauelemente sei im folgenden die Funktion der Bremsventilanordnung erläutert.

Bei angekoppeltem Anhänger, unbetätigter Parkbremse 82 und laufendem Motor des Zugfahrzeuges ist der Elektromagnet 118 bestromt, so daß die Bremsfeder 110 vorgespannt ist. Entsprechend der Federraten der Steuerfeder 56 und der Bremsfeder 110 ist die Regelfeder 60 mit einer Kraft vorgespannt, die der Druckkraft im mittleren Druckbereich von 8 - 18 bar entspricht. Der Regelkolben 46 befindet sich dann in einer Regelposition, in der die Verbindung vom Pumpenanschluß P zum Bremsanschluß B aufgesteuert ist, so daß das Anhängerbremsventil bei unbetätigter Fußbremse einen Druck erzeugt, der im mittleren Druckbereich b) gemäß Figur 1 liegt. Das heißt, der Hebelmechanismus 8 der Anhänger-Bremsanlage 2 befindet sich in seiner Grundposition, die Bremsbacken 6 sind nicht eingerückt.

Wird nun die Parkbremse 82 betätigt, so wird der Elektromagnet 118 stromlos geschaltet und die Bremsfeder 110 entlastet. Entsprechend wird auch die auf die rechte Stirnfläche des Regelkolbens 46 wirkende Kraft verringert, so daß dieser mitsamt der Regelfeder 60 nach rechts verschoben wird und die Verbindung zwischen dem Pumpenanschluß P und dem Bremsanschluß B zugesteuert und die Verbindung vom Bremsanschluß B zum Tankanschluß T aufgesteuert wird. Der Druck am Bremsanschluß B sinkt auf einen Druck unterhalb des mittleren Druckbereichs (Figur 1 ) ab, so daß die Bremsbacken 6 aufgrund der Wirkung der Speicherfeder 12 einrücken und die Anhängerbremse greift.

In dem vorbeschriebenen Betriebszustand verbleibt das Wegeventil 84 in seiner federvorgespannten Grundposition. Die Axialverschiebung des Regelkolbens 46 ist durch Auflaufen des Federtellers 62 auf den Anschlag 72 begrenzt.

Bei Betätigen des Bremspedals 74 und unbetätigter Parkbremse 82 wird die Rückseite des Pilotkolbens 64 mit dem Pilotdruck beaufschlagt, so daß der Regelkolben 46 über die Regelfeder 60, den Federteller 62, die Bremsfeder 110 und gegen die Wirkung der Steuerfeder 56 in der Darstellung nach Figur 2 nach links verschoben wird. Da die Federrate der Regelfeder 60 wesentlich größer ist als diejenige der Steuerfeder 56, wird die Regelfeder 60 zunächst fast nicht zusammengedrückt. Durch diese Stellbewegung des Regelkolbens 46 wird die Verbindung von B nach T zugesteuert, während die Verbindung von P nach B aufgesteuert wird, so daß sich der Bremsdruck am Anschluß B erhöht. Dieser erhöhte Bremsdruck wird über den Steueranschluß Z und die Zweigleitung 88 zum Wegeventil 84 gemeldet, so daß bei Überschreiten des Schaltdruckes des Wegeventils 84 dessen Wegeventilkolben gegen die Kraft der Druckfeder 90 aus seiner Grundposition c in die zweite Schaltposition d gebracht wird. D.h. beim Aufbau des Bremsdrucks am Bremsanschluß B wird dieser Bremsdruck über das Wegeventil 84 in die Lastdruckleitung 40 gemeldet, so daß die Regelpumpe 34 entsprechend angesteuert wird.

Der Bremsdruck am Bremsanschluß B wird über eine Steuerleitung 94 in einen Federraum 96 der Steuerfeder 56 gemeldet, so daß sich in diesem Federraum 96 ein Druck aufbaut, der den Regelkolben 46 in Schließstellung beaufschlagt. Die Position des Regelkolbens 46 stellt sich dann in Abhängigkeit vom Kräftegleichgewicht zwischen der einerseits über den Pilotkolben 64 und die Regelfeder 60 aufgebracht Druckkraft und andererseits der Kraft der Steuerfeder 56 und der über die Steuerleitung 94 aufgebrachten, aus dem Bremsdruck resultierenden Druckkraft sowie dem Drück im Ringraum 52 ein. Mit ansteigendem Bremsdruck wird auch die Regelfeder 60 zusammengedrückt. Bei betätigtem Bremsventil 74 und der daraus resultierenden Erhöhung des Bremsdrucks am Anschluß B verbleibt das Wegeventil 84 in der Schaltstellung d, so daß die Regelpumpe 34 in Abhängigkeit vom Lastdruck (Bremsdruck) angesteuert wird.

Die erfindungsgemäße Ausbildung des Anhängerbremsventils ermöglicht eine kostengünstige und kompakte Realisierung der Parkbrems-Sicherheitsfunktion, wobei keine zusätzlichen Ventilanordnungen zur Ansteuerung des Regelkolbens 46 bei betätigter Parkbremse vorgesehen werden müssen.

Offenbart ist ein Anhängerbremsventil, bei dem ein Regelkolben mittelbar oder unmittelbar über einen Elektromagneten mit einer Kraft beaufschlagbar ist, so daß bei Betätigen einer Parkbremse der vom Anhängerbremsventil erzeugte Bremsdruck auf ein Niveau absenkbar ist, in dem die Anhängerbremse selbsttätig einrückt.

## Patentansprüche

1. Anhängerbremsventil mit einem Regelkolben (46), über den ein Bremsanschluß (B) mit einem Pumpenanschluß (P) oder einem Tankanschluß (T) verbindbar ist, und der in eine Richtung, in der eine Steuerkante des Regelkolbens (46) die Verbindung zwischen dem Bremsanschluß (B) und dem Pumpenanschluß (P) aufsteuert, durch eine Regelfeder (60) beaufschlagbar ist,
**gekennzeichnet durch**
eine Steueranordnung (65, 84), mit einem mittelbar oder unmittelbar auf den Regelkolben (46) wirkenden Elektromagneten (118), der in dem Fall, in dem der Bremsdruck in einem Bereich liegt, in dem die Anhängerbremse nicht betätigt wird, in einer Schaltposition die Regelfeder (60) derart beaufschlagt, daß sich der Regelkolben (46) in eine Position verschiebt, in der der Bremsdruck am Bremsanschluß (B) abgesenkt wird, so daß die Anhängerbremse einrückt.

2. Anhängerbremsventil nach Anspruch 1, wobei der Regelkolben (46) in eine zweite Richtung, in der eine Steuerkante des Regelkolbens (46) die Verbindung zwischen dem Bremsanschluß (B) und dem Tankanschluß (T) aufsteuert, durch eine zweite Regelfedereinrichtung (56) beaufschlagbar ist.

3. Anhängerbremsventil nach Patentanspruch 1 oder 2, **dadurch gekennzeichnet, daß** die Regelfeder (60) von einem Pilotkolben (64) beaufschlagt ist, auf den in Abhängigkeit von der Betätigung eines Bremspedals (74) ein Pilotdruck wirkt und der mit dem Elektromagneten (118) der Steueranordnung in Wirkverbindung steht.

4. Anhängerbremsventil nach Patentanspruch 3, **dadurch gekennzeichnet, daß** über den Elektromagneten (118) eine Bremsfeder (110) vorspannbar ist, die an der vom Pilotdruck beaufschlagten Pilotkolbenrückseite abgestützt ist.

5. Anhängerbremsventil nach Patentanspruch 4, **dadurch gekennzeichnet, daß** die Federrate der Bremsfeder (110) so gewählt ist, daß im vorgespannten Zustand eine dem vorbestimmten Bremsdruckbereich entsprechende Federkraft auf den Pilotkolben (64) wirkt.

6. Anhängerbremsventil nach Patentanspruch 4 oder 5, **dadurch gekennzeichnet, daß** ein Stößel (116) des Elektromagneten (118) einen Federteller (114) trägt, über den die Bremsfeder (110) beaufschlagt ist und dem zur Begrenzung der Axialbewegung ein Anschlag (120) zugeordnet ist.

7. Anhängerbremsventil nach einem der Patentansprüche 4 bis 6, **dadurch gekennzeichnet, daß** der Pilotkolben (64) eine Sacklochbohrung (112) zur Aufnahme eines Endabschnittes der Bremsfeder (110) hat.

8. Anhängerbremsventil nach einem der Patentansprüche 2 bis 7, **dadurch gekennzeichnet, daß** ein elektrisches Signal einer Parkbremse (82) zur Betätigung des Elektromagneten verwendet wird.

9. Anhängerbremsventil nach einem der vorhergehenden Patentansprüche, **dadurch gekennzeichnet, daß** über die Steueranordnung (84) unterhalb eines vorbestimmten Bremsgrenzdruckes ein konstanter Referenzbremsdruck zu einer Pumpenanordnung (34) gemeldet ist.

10. Anhängerbremsventil nach Patentanspruch 9, **dadurch gekennzeichnet, daß** der Referenzbremsdruck der Tankdruck ist.

11. Anhängerbremsventil nach Patentanspruch 9 oder 10, **dadurch gekennzeichnet, daß** die Steueranordnung ein Wegeventil (84) hat, dessen Wegeventilkolben mittels einer Druckfeder (90) in eine Grundposition vorgespannt ist, und der an seiner anderen Stirnseite mit einem dem Bremsdruck entsprechenden Steuerdruck beaufschlagt ist, wobei die Federrate der Druckfeder (90) derart gewählt ist, daß der Wegeventilkolben bei Überschreiten des Bremsgrenzdruckes aus seiner Grundposition (c), in der dieser eine Lastmeldeleitung (40) mit dem Tank (T) verbindet, in eine zweite Schaltstellung (d), in der dieser die Lastmeldeleitung (40) mit dem Bremsanschluß (B) verbindet, bringbar ist.

## Claims

1. Trailer brake valve having a regulating piston (46) by means of which a brake connection (B) can be connected to a pump connection (P) or to a tank connection (T) and which can be acted upon by a regulating spring (60) in a direction in which a control edge of the regulating piston (46) opens the connection between the brake connection (B) and the pump connection (P),
**characterised by**
a control arrangement (65, 84) with a solenoid (118) which acts directly or indirectly on the regulating piston (46) and which, in the case where the brake pressure is in a range in which the trailer brake is not operated, acts in one switch position upon the regulating spring (60) in such a manner that the regulating piston (46) moves into a position in which the brake pressure at the brake connection (B) is lowered, with the result that the trailer brake engages.

2. Trailer brake valve according to claim 1, wherein the regulating piston (46) can be acted upon by a second regulating spring device (56) in a second direction in which a control edge of the regulating piston (46) opens the connection between the brake connection (B) and the tank connection (T).

3. Trailer brake valve according to patent claim 1 or 2, **characterised in that** the regulating spring (60) is acted upon by a pilot piston (64) on which a pilot pressure acts in dependence upon operation of a brake pedal (74) and which is in operative connection with the solenoid (118) of the control arrangement.

4. Trailer brake valve according to patent claim 3, **characterised in that** a brake spring (110) supported against the rear side of the pilot piston which is acted upon by pilot pressure can be pre-loaded by means of the solenoid (118).

5. Trailer brake valve according to patent claim 4, **characterised in that** the spring rate of the brake spring (110) is so selected that, in the pre-loaded state, a spring force corresponding to the predetermined brake pressure range acts on the pilot piston (64).

6. Trailer brake valve according to patent claim 4 or 5, **characterised in that** a push rod (116) of the solenoid (118) carries a spring collar (114) by means of which the brake spring (110) is acted upon and with which a stop (120) is associated for limiting the axial movement.

7. Trailer brake valve according to any one of patent claims 4 to 6, **characterised in that** the pilot piston (64) has a blind bore (112) for receiving an end portion of the brake spring (110).

8. Trailer brake valve according to any one of patent claims 2 to 7, **characterised in that** an electrical signal of a parking brake (82) is used to operate the solenoid.

9. Trailer brake valve according to any one of the preceding patent claims, **characterised in that**, by means of the control arrangement (84), below a predetermined brake pressure limit, a constant reference brake pressure is signalled to a pump arrangement (34).

10. Trailer brake valve according to patent claim 9, **characterised in that** the reference brake pressure is the tank pressure.

11. Trailer brake valve according to patent claim 9 or 10, **characterised in that** the control arrangement has a directional control valve (84) the directional control valve piston of which is biased into a starting position by means of a pressure spring (90) and is acted upon at its other end face by a control pressure corresponding to the brake pressure, the spring rate of the pressure spring (90) being so selected that, when the brake pressure limit is exceeded, the directional control valve piston can be brought out of its starting position (c), in which it connects a load signalling line (40) to the tank (T), into a second switch position (d), in which it connects the load signalling line (40) to the brake connection (B).

## Revendications

1. Soupape de frein de remorque comprenant un piston d'asservissement (46) permettant de relier un raccord de frein (B) à un raccord de pompe (P) ou à un raccord de réservoir (T), et qui peut être actionné par un ressort d'asservissement (60) dans un sens dans lequel une rampe hélicoïdale du piston d'asservissement (B) commande la jonction entre le raccord de frein (B) et le raccord de pompe, **caractérisée par** un ensemble de commande (65, 84) comprenant un électro-aimant (118) agissant indirectement ou directement sur le piston d'asservissement (46) et qui, dans le cas où la pression de freinage se situe dans une plage dans laquelle le frein de remorque n'est pas actionné, s'applique dans une position de commutation sur le ressort d'asservissement (60), de telle sorte que le piston d'asservissement (46) se déplace dans une position dans laquelle la pression de freinage au niveau du raccord de frein (B) est réduite de manière à ce que le frein de remorque s'enclenche.

2. Soupape de frein de remorque selon la revendication 1 dans laquelle le piston d'asservissement (46) est actionné à l'aide d'un deuxième dispositif de ressort d'asservissement (56) dans un deuxième sens dans lequel une rampe hélicoïdale du piston d'asservissement (46) commande la jonction entre le raccord du frein (B) et le raccord du réservoir (T).

3. Soupape de frein de remorque selon la revendication 1 ou 2, **caractérisée en ce que** le ressort d'asservissement (60) est actionné par un piston pilote (64) sur lequel agit une pression pilote en fonction de l'actionnement d'une pédale de frein (74) et qui est en contact actif avec l'électro-aimant (118) de l'ensemble de commande.

4. Soupape de frein de remorque selon la revendication 3, **caractérisée en ce qu'**à l'aide de l'électro-aimant (118), un ressort de frein (110) qui s'appuie à la face arrière du piston pilote sur laquelle est appliquée la pression pilote, est précontraint.

5. Soupape de frein de remorque selon la revendication 4, **caractérisée en ce que** l'élasticité du ressort de frein (110) est choisie telle qu'en état précontraint une force élastique correspondant à la plage de pression de freinage prédéterminée agisse sur le piston pilote (64).

6. Soupape de frein de remorque selon la revendication 4 ou 5, **caractérisée en ce qu'**un coulisseau (116) de l'électro-aimant (118) porte une coupelle de ressort (114) par l'intermédiaire de laquelle le ressort de frein (110) est actionnée et à laquelle est associée une butée (120) pour limiter le déplacement axial.

7. Soupape de frein de remorque selon l'une des revendications 4 à 6, **caractérisée en ce que** le piston pilote (64) présente un trou borgne (112) pour recevoir une section d'extrémité du ressort de frein (110).

8. Soupape de frein de remorque selon l'une des revendications 2 à 7, **caractérisée en ce que** un signal électrique d'un frein de stationnement (82) est utilisé pour actionner l'électro-aimant.

9. Soupape de frein de remorque selon l'une quelconque des revendications précédentes, **caractérisée en ce que** par l'intermédiaire de l'ensemble de commande (84), en dessous d'une pression de freinage limite prédéterminée, une pression de freinage de référence constante est signalée à un ensemble de pompe (34).

10. Soupape de frein de remorque . selon la revendication 9, **caractérisée en ce que** la pression de freinage de référence est la pression de réservoir.

11. Soupape de frein de remorque selon la revendication 9 ou 10, **caractérisée en ce que** l'ensemble de commande présente un distributeur (84) dont le piston de distributeur est précontraint à l'aide d'un ressort de compression (90) dans une position initiale et actionné sur son autre face frontale par une pression de commande correspondant à la pression de freinage, l'élasticité du ressort de compression (90) étant choisie telle que le piston de distributeur, lors d'un dépassement de la pression de freinage limite, est déplacé depuis sa position initiale (c) dans laquelle il relie une ligne des commandes de charge au réservoir (T) dans une deuxième position de commutation (d) dans laquelle il relie une ligne des commandes de charge au raccord du frein (B).
